# EUROPÄISCHE PATENTSCHRIFT

(11) **EP 4 182 177 B1**
(45) Veröffentlichungstag und Bekanntmachung des Hinweises auf die Patenterteilung: **03.09.2025**
(21) Anmeldenummer: 21743384.6
(22) Anmeldetag: 01.07.2021
(51) Int. Cl.: B60H 1/00, B60H 1/18, A01G 23/00, B60P 3/41, B60R 9/06

(54) **MOBILE ARBEITSMASCHINE, INSBESONDERE FORSTMASCHINE**
MOBILE WORKING MACHINE, IN PARTICULAR FORESTRY MACHINE
MACHINE DE TRAVAIL MOBILE, EN PARTICULIER MACHINE FORESTIÈRE

(30) Priorität: 16.07.2020 DE 102020118839
(43) Veröffentlichungstag der Anmeldung: 24.05.2023
(73) Patentinhaber: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE); WELSCHOF, Bernward, 63762 Großostheim (DE)
(74) Vertreter: Patentship Patentanwaltgesellschaft
(86) Internationale Anmeldenummer: PCT/EP2021/068182
(87) Internationale Veröffentlichungsnummer: WO 2022/012951

(56) Entgegenhaltungen:
- WO-A1-2008/129120
- CN-A- 101 780 762
- DE-A1- 102012 004 821
- DE-A1- 102018 104 810
- DE-U1- 202019 104 164

## Beschreibung

Die Erfindung betrifft eine mobile Arbeitsmaschine, insbesondere Forstmaschine, die ein Fahrwerk und ein Antriebsaggregat, das einen Verbrennungsmotor und mindestens eine von dem Verbrennungsmotor angetriebene Hydraulikpumpe, die eine Hydraulikanlage mit Druckmittel versorgt, aufweist, wobei der Verbrennungsmotor mit der Hydraulikpumpe in einem innerhalb eines haubenartigen Gehäuses ausgebildeten Motorraum angeordnet ist, wobei die Arbeitsmaschine keinen Fahrerarbeitsplatz für einen Bediener aufweist und als mittels einer Funkfernsteuerung ferngesteuerte Arbeitsmaschine ausgebildet ist,.

Eine gattungsgemäße ferngesteuerte Arbeitsmaschine ist aus der DE 10 2018 104 810 A1 bekannt.

Derartige mobile, beispielsweise als Forstmaschinen, ausgebildete Arbeitsmaschinen werden als Fällhilfe für Bäume und als Rückehilfe zum Vorliefern von gefällten Bäumen an einen Waldweg benutzt. Da die Arbeitsmaschine keinen Fahrerarbeitsplatz für einen Bediener aufweist, kann eine gattungsgemäße Arbeitsmaschine kompakt und leicht gebaut werden und ermöglicht es, in Waldgebieten eingesetzt zu werden, die für herkömmliche Großmaschinen nicht geeignet sind. Durch die Funkfernsteuerung ist die Arbeitsmaschine einfach und ohne lange Einarbeitungszeit zu bedienen. Durch die Fernbedienbarkeit entsteht für den Bediener weiterhin kein Fahrerrisiko am Hang oder im Wald.

Gattungsgemäße mobile Arbeitsmaschinen werden über lange Zeiträume und bei allen Witterungseinflüssen im Freien von der Bedienperson mittels der Fernbedienung bedient, wobei die Bedienperson ebenfalls den Witterungseinflüssen ausgesetzt ist. Um den Arbeitskomfort der die Arbeitsmaschine bedienenden Bedienperson zu verbessern, ist es als Anforderung gewünscht, der Bedienperson die Möglichkeit zu geben, Getränke und Essen in der Arbeitsmaschine mitzuführen und warm zu halten sowie Kleidungsstücke, beispielsweise Handschuhe, in der Arbeitsmaschine mitzuführen, zu trocknen und warm zu halten. Die aus der DE 10 2018 104 810 A1 bekannte gattungsgemäße Arbeitsmaschine bietet für diese Anforderungen keine Lösung.

Die DE 20 2019 104 164 U1 offenbart ein Staufach in einer Fahrzeugmotorhaube.

Aus der WO 2008/129120 A1 ist ein Container bekannt, der in einem Laderaum eines Fahrzeugs angebracht werden kann und von dem Abgas des Fahrzeugmotors aufgeheizt werden kann.

Die CN 101 780 762 A offenbart eine als Bagger ausgebildete Baumaschine, bei der ein Zwischenraum zwischen zwei Kühlern als Aufbewahrungsfach zum Mitführen von Werkzeugen und Schmiermittel ausgebildet ist.

Der vorliegenden Erfindung liegt die Aufgabe zugrunde, eine Arbeitsmaschine der eingangs genannten Gattung zur Verfügung zu stellen, die hinsichtlich des Arbeitskomforts der die Arbeitsmaschine bedienenden Bedienperson verbessert ist.

Diese Aufgabe wird erfindungsgemäß dadurch gelöst, dass innerhalb des haubenartigen Gehäuses mindestens ein von der Abwärme des Antriebsaggregats erwärmbares Aufbewahrungsfach angeordnet ist, wobei innerhalb des haubenartigen Gehäuses ein von der Abwärme mindestens eines heißen Bauteils des Antriebsaggregats erwärmbares erstes Aufbewahrungsfach angeordnet ist, wobei das heiße Bauteil des Antriebsaggregats eine Auspuffanlage des Verbrennungsmotors darstellt.

Die Quelle der Abwärme des Antriebsaggregats, die das mindestens eine Aufbewahrungsfach erwärmt, kann von dem Verbrennungsmotor oder der mindestens einen Hydraulikpumpe oder von Schläuchen bzw. Rohren des Antriebsaggregats gebildet werden.

Ein oder mehrere von der Abwärme des Antriebsaggregats erwärmbare Aufbewahrungsfächer ermöglichen es, Essen und Getränke, beispielsweise Tee oder Kaffee, und Kleidungsstücke, beispielsweise Handschuhen, mitzuführen und diese zu erwärmen bzw. heiß zu halten, wodurch ein hoher Arbeitskomfort der Arbeitsmaschine erzielt wird.

Das mindestens eine Aufbewahrungsfach ist hierbei innerhalb des haubenartigen Gehäuses angeordnet und somit integral in das haubenartige Gehäuse eingebaut, wodurch das mindestens eine Aufbewahrungsfach zu keiner Vergrößerung der Außenabmessungen der kompakten Arbeitsmaschine führt.

Gemäß der Erfindung ist innerhalb des haubenartigen Gehäuses ein von der Abwärme mindestens eines heißen Bauteils des Antriebsaggregats erwärmbares erstes Aufbewahrungsfach und optional innerhalb des haubenartigen Gehäuses ein von der Abwärme mindestens eines warmen Bauteils des Antriebsaggregats erwärmbares zweites Aufbewahrungsfach angeordnet.

Heiße Bauteils des Antriebsaggregats stellen erfindungsgemäß eine Auspuffanlage des Verbrennungsmotors und insbesondere ein Krümmer und ein Endschalldämpfer der Auspuffanlage dar. Warme Bauteile des Antriebsaggregats stellen beispielsweise die Hydraulikpumpen sowie eine Kühlereinrichtung des Verbrennungsmotors oder eine Kühlereinrichtung der Hydraulikanlage dar.

Das erste Aufbewahrungsfach bildet somit ein Heißfach, das nahe an einem heißen Bauteil des Antriebsaggregats angeordnet ist und von dessen Abwärme erwärmbar ist. Das zweite Aufbewahrungsfach bildet somit ein Warmfach, das nahe an einem warmen Bauteil des Antriebsaggregats angeordnet ist und von dessen Abwärme erwärmbar ist.

Das von der Abwärme des heißen Bauteils des Antriebsaggregats erwärmbare erste Aufbewahrungsfach bildet somit ein Heißfach, das durch die Abwärme des heißen Bauteils des Antriebsaggregats bevorzugt auf Temperaturen im Bereich von 60-95° C aufgeheizt werden kann und sich somit zum Mitführen, Erwärmen und Heißhalten von Essen und Getränken, beispielsweise Tee oder Kaffee, eignet. Das von der Abwärme des warmen Bauteils des Antriebsaggregats erwärmbare zweite Aufbewahrungsfach bildet somit ein Warmfach, das durch die Abwärme des warmen Bauteils des Antriebsaggregats bevorzugt auf Temperaturen im Bereich von 30-70° C aufgeheizt werden kann und sich somit zum Mitführen, Trocknen und Warmhalten von Kleidungsstücken, beispielsweise Handschuhen, eignet.

Gemäß einer vorteilhaften Ausgestaltungsform der Erfindung sind innerhalb des haubenartigen Gehäuses eine einen Endschalldämpfer umfassende Auspuffanlage des Verbrennungsmotors und eine Kühlereinrichtung der Hydraulikanlage oder des Verbrennungsmotors angeordnet, wobei innerhalb des haubenartigen Gehäuses angrenzend an den Endschalldämpfer das von der Abwärme der Auspuffanlage, insbesondere des Endschalldämpfers, erwärmbare erste Aufbewahrungsfach und/oder innerhalb des haubenartigen Gehäuses angrenzend an die Kühlereinrichtung das von der Abwärme der Kühlereinrichtung erwärmbare zweite Aufbewahrungsfach angeordnet ist. Hierdurch kann in einfacher Weise ein von der Abwärme des Endschalldämpfers des Verbrennungsmotors als heißes Bauteil des Antriebsaggregats erwärmbares Heißfach gebildet werden, das sich somit zum Mitführen, Erwärmen und Heißhalten von Essen und Getränken, beispielsweise Tee oder Kaffee, eignet. Weiterhin kann hierdurch in einfacher Weise das von der Abwärme der Kühlereinrichtung des Verbrennungsmotors oder der Hydraulikanlage als warmes Bauteil des Antriebsaggregats erwärmbare Warmfach gebildet werden, das sich somit zum Mitführen, Trocknen und Warmhalten von Kleidungsstücken, beispielsweise Handschuhen, eignet.

Gemäß einer vorteilhaften Ausgestaltungsform der Erfindung ist der Endschalldämpfer in einem innerhalb des haubenartigen Gehäuses oberhalb des Motorraums angeordneten Kühler- und Abgasraum angeordnet, wobei das erste Aufbewahrungsfach in dem Kühler- und Abgasraum angrenzend an den Endschalldämpfer angeordnet ist. Die Anordnung des ersten Aufbewahrungsfaches in dem Kühler- und Abgasraum angrenzend an den Endschalldämpfer ermöglicht in einfacher Weise eine Erwärmung und Temperierung des ersten Aufbewahrungsfaches von der Abwärme des Endschalldämpfers.

Gemäß einer vorteilhaften Ausgestaltungsform der Erfindung ist die Kühlereinrichtung in dem innerhalb des haubenartigen Gehäuses oberhalb des Motorraums angeordneten Kühler- und Abgasraum angeordnet, wobei das zweite Aufbewahrungsfach in dem Kühler- und Abgasraum angrenzend an die Kühlereinrichtung angeordnet ist. Die Anordnung des zweiten Aufbewahrungsfaches in dem Kühler- und Abgasraum angrenzend an den Endschalldämpfer ermöglicht in einfacher Weise eine Erwärmung und Temperierung des zweiten Aufbewahrungsfaches von der Abwärme der Kühlereinrichtung.

Gemäß einer vorteilhaften Ausführungsform der Erfindung ist der Endschalldämpfer in einem in dem Kühler- und Abgasraum angeordneten Geräuschdämmkasten angeordnet, wobei eine Seitenwand des Geräuschdämmkastens gleichzeitig eine Seitenwand des ersten Aufbewahrungsfachs bildet. Der Geräuschdämmkasten bildet somit eine Geräuschdämmbox um den Endschalldämpfer und ist von der Abwärme des Endschalldämpfers aufgeheizt. Sofern eine Seitenwand des Geräuschdämmkastens gleichzeitig eine Seitenwand des ersten Aufbewahrungsfachs bildet, kann somit mit einfachem Aufbau ein Wärmeübergang von dem Geräuschdämmkasten zu dem ersten Aufbewahrungsfach erzielt werden, um das erste Aufbewahrungsfach von der Abwärme des Endschalldämpfers aufzuheizen.

Hinsichtlich eines einfachen Aufbaus ergeben sich Vorteile, wenn gemäß einer vorteilhaften Ausführungsform der Erfindung das erste Aufbewahrungsfach seitlich und vertikal über dem Endschalldämpfer angeordnet ist. Mit einer Anordnung des ersten Aufbewahrungsfaches seitlich und vertikal oberhalb des Endschalldämpfers kann bei einfachem Aufbau das in das haubenartige Gehäuse integrierte erste Aufbewahrungsfach von der Abwärme des Endschalldämpfers aufgeheizt werden.

Gemäß einer vorteilhaften Ausführungsform der Erfindung weist das zweite Aufbewahrungsfach eine im Abluftstrom der Kühlereinrichtung liegende Seitenwand auf. Hierdurch kann mit einfachem Aufbau ein Wärmeübergang von dem Abluftstrom und somit dem Abwärmestrom der Kühlereinrichtung zu dem zweiten Aufbewahrungsfach erzielt werden, um das zweite Aufbewahrungsfach von der Abwärme der Kühlereinrichtung aufzuheizen.

Besondere Vorteile sind hierbei erzielbar, wenn gemäß einer vorteilhaften Ausführungsform der Erfindung die Kühlereinrichtung liegend in dem Kühler- und Abgasraum angeordnet ist mit einem Abluftstrom nach vertikal oben. Dies ermöglicht es, die Abwärme der Kühlereinrichtung über einen großen Luftauslass an der Oberseite der Arbeitsmaschine an die Umgebung nach oben abzuführen.

Hinsichtlich eines einfachen Aufbaus ergeben sich Vorteile, wenn gemäß einer vorteilhaften Ausführungsform der Erfindung das zweite Aufbewahrungsfach seitlich und vertikal über der Kühlereinrichtung angeordnet ist. Mit einer Anordnung des zweiten Aufbewahrungsfaches seitlich und vertikal oberhalb der Kühlereinrichtung kann bei einfachem Aufbau das in das haubenartige Gehäuse integrierte zweite Aufbewahrungsfach von dem nach oben zum Luftauslass geführten Abluftstrom der Kühlereinrichtung erwärmt und aufgeheizt werden.

Gemäß einer vorteilhaften Ausführungsform der Erfindung ist das mindestens eine Aufbewahrungsfach mittels eines in einer Oberwand oder einer Seitenwand des haubenartigen Gehäuses angeordneten Deckels zugänglich. Über einen Deckel, der in der Oberwand oder der Seitenwand des haubenartigen Gehäuses angeordnet ist, kann in einfacher Weise eine Zugänglichkeit in das entsprechende Aufbewahrungsfach erzielt werden.

Gemäß einer vorteilhaften Weiterbildung der Erfindung ist das mindestens eine Aufbewahrungsfach mit einer elektrischen Zusatzheizung versehen. Mit einer derartigen Zusatzheizung kann eine Temperierung des entsprechenden Aufbewahrungsfachs erzielt werden, wenn die Abwärme des Antriebsaggregats nicht ausreicht, beispielsweise bei abgestellter Arbeitsmaschine während längerer Pausenzeiten.

Gemäß einer vorteilhaften Weiterbildung der Erfindung ist das mindestens eine Aufbewahrungsfach zur Temperatureinstellung mit jeweils einer Isolier-Klappeneinrichtung versehen. Mit einer Isolier-Klappeneinrichtung, die eine oder mehrere Klappen aufweisen kann, kann durch Öffnen bzw. Schließen der Isolier-Klappeneinrichtung die Temperatur in dem entsprechenden Aufbewahrungsfach in einfacher Weise eingestellt werden.

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung einer erfindungsgemäßen mobilen Arbeitsmaschine,
- Figur 2: die Arbeitsmaschine der Figur 1 in einer Draufsicht auf den vorderen Abschnitt der Arbeitsmaschine,
- Figur 3: einen Schnitt entlang der Linie A-A der Figur 2 und
- Figur 4: einen Schnitt entlang der Linie B-B der Figur 2.

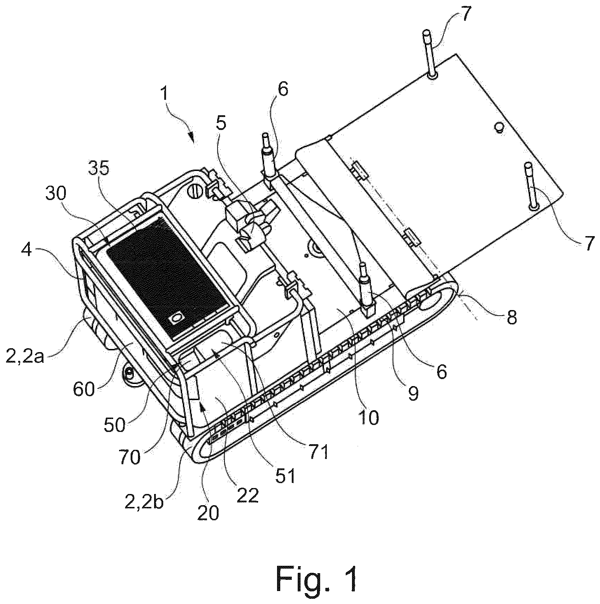

In der Figur 1 ist eine erfindungsgemäße ferngesteuerte mobile Arbeitsmaschine 1, beispielsweise Forstmaschine, in einer perspektivischen Darstellung dargestellt.

Die mobile Arbeitsmaschine 1 umfasst ein Fahrwerk 2, das im dargestellten Ausführungsbeispiel von zwei Raupenfahrwerken 2a, 2b gebildet ist, die jeweils beispielsweise von einem hydraulischen Fahrantriebsmotor angetrieben sind.

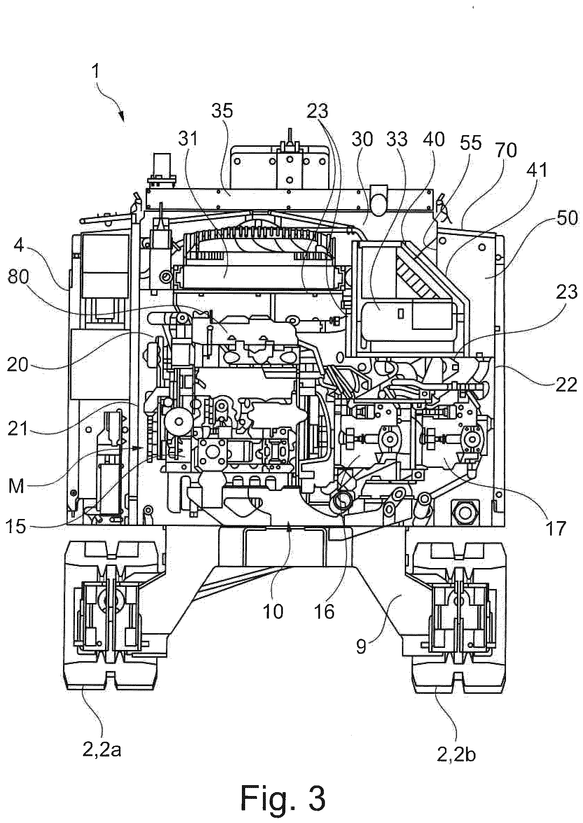

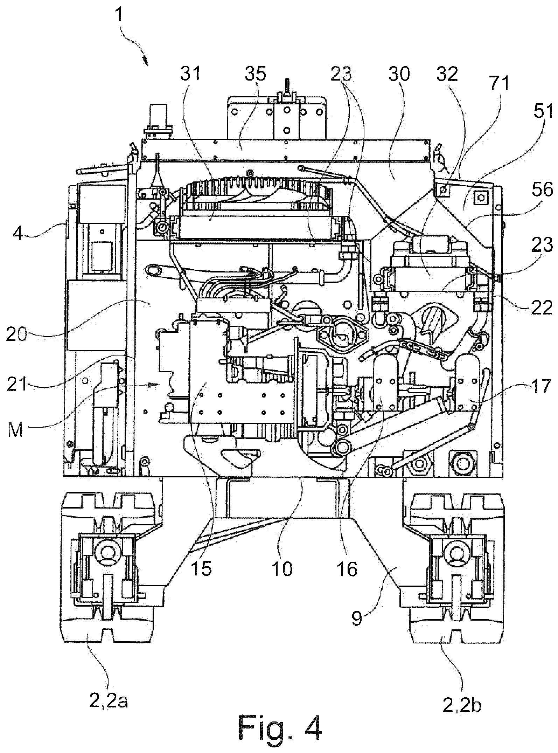

Die mobile Arbeitsmaschine 1 weist als Antriebsquelle - wie in den Figuren 3 und 4 ersichtlich ist - ein Antriebsaggregat M auf, das innerhalb eines haubenartigen Gehäuses 4 in dessen vorderen Abschnitt angeordnet ist. Die Arbeitsmaschine 1 weist keinen Fahrerarbeitsplatz für einen Bediener auf und ist mittels einer nicht näher dargestellten Funkfernsteuerung von einem Bediener fernsteuerbar.

Die Arbeitsmaschine 1 weist im dargestellten Ausführungsbeispiel weiterhin eine Seilwinde 5, eine Runge 6 und ein verstellbares Rampenschild 7 auf, das um eine horizontale Fahrzeugquerachse 8 verstellbar am Fahrzeugheck eines Fahrzeugkörpers 9 der Arbeitsmaschine 1 angeordnet ist.

Die Runge 6 ist in vertikaler Richtung oberhalb einer Bodenplatte 10 des Fahrzeugkörpers 9 angeordnet.

Das haubenartige Gehäuse 4, in dem das Antriebsaggregat M und die Seilwinde 5 angeordnet sind, bildet eine vordere Hälfte der Arbeitsmaschine 1. Die Bodenplatte 10 mit der darauf befindlichen Runge 6 bildet eine hintere Hälfte der Arbeitsmaschine 1. Das Antriebsaggregat M ist hierbei in einem vorderen Abschnitt des haubenartigen Gehäuses 4 und die Seilwinde 5 in einem hinteren Abschnitt des haubenartigen Gehäuses 4 angeordnet.

Das Antriebsaggregat M weist - wie aus den Figuren 3 und 4 ersichtlich ist - einen Verbrennungsmotor 15 und mindestens eine von dem Verbrennungsmotor 15 angetriebene Hydraulikpumpe 16, 17 auf, die eine Hydraulikanlage der Arbeitsmaschine mit Druckmittel versorgt. Der Verbrennungsmotor 15 ist - wie aus den Figuren 3 und 4 ersichtlich ist - mit einer Längsachse in Fahrzeugquerrichtung angeordnet und treibt die mindestens eine Hydraulikpumpe 16, 17, beispielsweise eine Verstellpumpe, an, die die Hydraulikanlage der Arbeitsmaschine 1 mit Druckmittel versorgt. Die Hydraulikanlage umfasst als Verbraucher die Fahrantriebsmotoren, einen die Seilwinde 5 antreibenden Hydraulikmotor und weitere hydraulische Verbraucher, beispielsweise Hydraulikzylinder zum Verstellen des Rampenschildes 7.

Der Verbrennungsmotor 15 und die Hydraulikpumpen 16, 17 und somit das Antriebsaggregat M sind in einem innerhalb des haubenartigen Gehäuses 4 angeordneten geschlossenen Motorraum 20 angeordnet. Der Motorraum 20 ist zur Seite von Seitenblechen 21, 22, nach unten von der Bodenplatte 10 und nach oben durch eine Deckelplatte 23 begrenzt. Das Seitenblech 22 bildet hierbei eine seitliche Außenwand des haubenartigen Gehäuses 4. Die Deckelplatte 23 ist abgekröpft ausgeführt und weist im Bereich des Verbrennungsmotors 15 einen höheren Abschnitt wie im Bereich der Hydraulikpumpen 16, 17 auf. In Fahrzeuglängsrichtung nach hinten und vorne ist der Motorraum 20 durch eine Vorderwand und Rückwand begrenzt. Der Motorraum 20 ist bevorzugt mit einer Dämmung (Wärmedämmung und Schalldämmung) versehen.

In vertikaler Richtung oberhalb des Motorraums 20, in dem der Verbrennungsmotor 15 und die Hydraulikpumpen 16, 17 angeordnet sind, ist in dem haubenartigen Gehäuse 4 ein Kühler- und Abgasraum 30 ausgebildet, in dem eine erste Kühlereinrichtung 31, eine zweite Kühlereinrichtung 32 und eine Auspuffanlage mit einem Endschalldämpfer 33 des Verbrennungsmotors 15 angeordnet ist. Im dargestellten Ausführungsbeispiel ist die erste Kühlereinrichtung 31 als Kühlereinrichtung des Verbrennungsmotors 15 und die zweite Kühlereinrichtung 32 als Kühlereinrichtung, beispielsweise Hydraulikölkühler, der Hydraulikanlage ausgeführt. Es versteht sich, dass die Kühlereinrichtungen 31, 32 auch vertauschte Funktionen aufweisen können, so dass die erste Kühlereinrichtung 31 als Kühlereinrichtung, beispielsweise Hydraulikölkühler, der Hydraulikanlage und die zweite Kühlereinrichtung 32 als Kühlereinrichtung des Verbrennungsmotors 15 ausgeführt ist.

Die Kühlereinrichtung 31 und/oder die Kühlereinrichtung 32 können mit einem angetriebenen Lüfter versehen sein, der einen Kühlluftstrom erzeugt. Der Kühler- und Abgasraum 30 ist zur Seite von den Seitenblechen 21, 22 und nach unten durch die Deckelplatte 23 des Motorraums 20 begrenzt. Nach oben ist der Kühler- und Abgasraum 45 im Wesentlichen offen ausgebildet und mit einem Luftauslassgitter 35 versehen.

Die Kühlereinrichtung 31 des Verbrennungsmotors 15 und/oder die Kühlereinrichtung 32 der Hydraulikanlage sind bevorzugt liegend angeordnet und weisen einen Luftauslass eines Kühlluftstromes nach vertikal oben auf. Die Kühlereinrichtung 31 des Verbrennungsmotors 15 und/oder die Kühlereinrichtung 32 der Hydraulikanlage ermögliche somit eine Luft- und Wärmeabfuhr nach oben. Die Kühlereinrichtung 31 des Verbrennungsmotors 15 ist hierbei auf dem erhöhten Abschnitt der Deckelplatte 23 über dem Verbrennungsmotor 15 angeordnet und die Kühlereinrichtung 32 auf dem tieferen Abschnitt der Deckelplatte 23 über den Hydraulikpumpen 16, 17.

Der Endschalldämpfer 33 ist ebenfalls auf dem tieferen Abschnitt der Deckelplatte 23 über den Hydraulikpumpen 16, 17 angeordnet. Der Endschalldämpfer 33 ist weiterhin in einem in dem Kühler- und Abgasraum 30 angeordneten Geräuschdämmkasten 40 angeordnet.

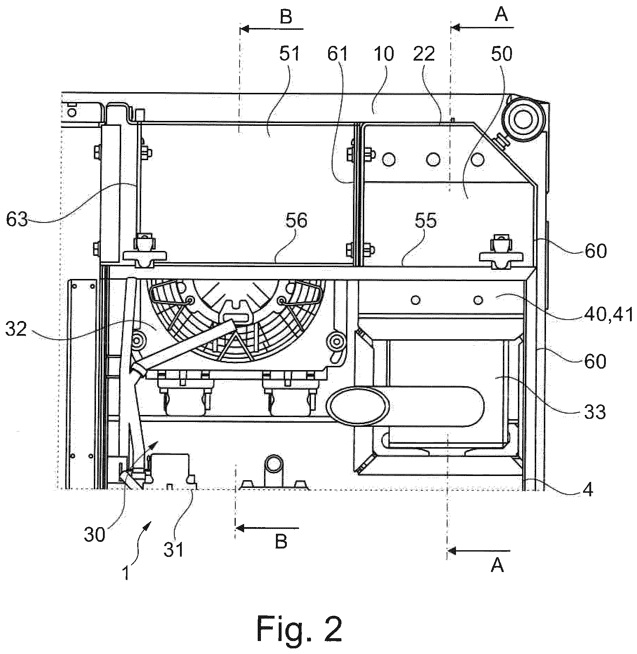

Die Figur 2 zeigt hierbei eine Draufsicht auf den oberhalb des Motorraums 20 angeordneten Kühler- und Abgasraum 30 bei entferntem Luftauslassgitter 35, wobei der Endschalldämpfer 33, die Kühlereinrichtung 32 der Hydraulikanlage und die Kühlereinrichtung 31 des Verbrennungsmotors 15 dargestellt ist. Wie aus der Figur 2 ersichtlich ist, sind die Kühlereinrichtung 31 des Verbrennungsmotors 15 und die Kühlereinrichtung 32 der Hydraulikanlage in Fahrzeugquerrichtung nebeneinander angeordnet und der Endschalldämpfer 33 in Fahrzeuglängsrichtung vor der Kühlereinrichtung 32 angeordnet.

Erfindungsgemäß ist - wie aus den Figuren 2 bis 4 ersichtlich ist - innerhalb des haubenartigen Gehäuses 4 mindestens ein von der Abwärme des Antriebsaggregats M erwärmbares Aufbewahrungsfach 50 bzw. 51 angeordnet. Im dargestellten Ausführungsbeispiel sind zwei Aufbewahrungsfächer 50, 51 vorgesehen, wobei innerhalb des haubenartigen Gehäuses 4 ein von der Abwärme mindestens eines heißen Bauteils des Antriebsaggregats M erwärmbares erstes Aufbewahrungsfach 50 und innerhalb des haubenartigen Gehäuses 4 ein von der Abwärme mindestens einen warmen Bauteils des Antriebsaggregats M erwärmbares zweites Aufbewahrungsfach 51 angeordnet ist.

Im dargestellten Ausführungsbeispiel ist das das erste Aufbewahrungsfach 50 erwärmende heiße Bauteil des Antriebsaggregat M von dem Endschalldämpfer 33 gebildet. Alternativ kann das das erste Aufbewahrungsfach 50 erwärmende heiße Bauteil des Antriebsaggregat M von einem Krümmer 80 der Auspuffanlage des Verbrennungsmotors 15 gebildet sein. Im dargestellten Ausführungsbeispiel ist das das zweite Aufbewahrungsfach 51 erwärmende warme Bauteil des Antriebsaggregat M von der Kühlereinrichtung 32 gebildet. Alternativ kann das das zweite Aufbewahrungsfach 51 erwärmende warme Bauteil des Antriebsaggregat M von der Kühlereinrichtung 31 oder von einer oder beiden Hydraulikpumpen 16 bzw. 17 oder an die Hydraulikpumpe 16 bzw. 17 angeschlossenen Schläuchen oder Rohren gebildet sein.

Erfindungsgemäß ist somit innerhalb des haubenartigen Gehäuses 4 - wie aus den Figuren 2 und 3 ersichtlich ist - nahe bzw. angrenzend an das heiße Bauteil des Antriebsaggregats M, im dargestellten Ausführungsbeispiel nahe bzw. angrenzend an den Endschalldämpfer 33, das von der Abwärme des heißen Bauteils des Antriebsaggregats M erwärmbare erste Aufbewahrungsfach 50 angeordnet. Das erste Aufbewahrungsfach 50 ist somit als Heißfach ausgebildet, das zum Mitführen, Erwärmen und Heißhalten von Essen und Getränken, beispielsweise Tee oder Kaffee, vorgesehen ist.

Erfindungsgemäß ist - wie aus den Figuren 2 und 4 ersichtlich ist - innerhalb des haubenartigen Gehäuses 4 nahe bzw. angrenzend an das warme Bauteil des Antriebsaggregats M, im dargestellten Ausführungsbeispiel nahe bzw. angrenzend an die Kühlereinrichtung 32, das von der Abwärme des warmen Bauteils des Antriebsaggregats A erwärmbare zweite Aufbewahrungsfach 51 angeordnet. Das zweite Aufbewahrungsfach 51 ist somit als Warmfach ausgebildet, das zum Mitführen, Trocknen und Warmhalten von Kleidungsstücken, beispielsweise Handschuhen, vorgesehen ist.

Das erste Aufbewahrungsfach 50 ist hierbei in dem Kühler- und Abgasraum 30 nahe bzw. angrenzend an den Endschalldämpfer 33 angeordnet.

Das zweite Aufbewahrungsfach 51 ist entsprechend in dem Kühler- und Abgasraum 30 nahe bzw. angrenzend an die Kühlereinrichtung 32 angeordnet.

Das erste Aufbewahrungsfach 50 ist nach außen von dem Seitenblech 22 begrenzt und nach innen von einem vertikalen Begrenzungsblech 55 und einer Seitenwand 41 des Geräuschdämmkastens 40 begrenzt. Das erste Aufbewahrungsfach 50 erstreckt sich in Fahrzeuglängsrichtung nach vorne bis zur Vorderwand 60 des haubenartigen Gehäuses 4 und nach hinten bis zur einer Rückwand 61. Das erste Aufbewahrungsfach 50 ist seitlich und vertikal über dem Endschalldämpfer 33 angeordnet und erstreckt sich in dem Bereich seitlich neben Endschalldämpfer 33 bis zu der Deckelplatte 23. Der Wärmetransport von dem heißen Bauteil, im dargestellten Ausführungsbeispiel von dem Endschalldämpfer 33, zu dem ersten Aufbewahrungsfach 50 erfolgt bevorzugt über Strahlung des heißen Bauteils und/oder über Luftmassentransport von heißer Luft und/oder durch Wärmeleitung über die das heiße Bauteil befestigende Trägerbauteile, die aus Metall oder Aluminium bestehen können.

Das zweite Aufbewahrungsfach 51 ist nach außen von dem Seitenblech 22 begrenzt und nach innen durch eine Seitenwand 56, die im Abluftstrom der Kühlereinrichtung 32 liegt. Die Seitenwand 56 erstreckt sich im dargestellten Ausführungsbeispiel schräg nach unten und schließt mit seinem unteren Ende an das Seitenblech 22 an. Das zweite Aufbewahrungsfach 51 erstreckt sich in Fahrzeuglängsrichtung nach vorne bis zur Rückwand 61 des ersten Aufbewahrungsfachs 50 und nach hinten bis zu einer Rückwand 63. Das zweite Aufbewahrungsfach 51 ist seitlich und vertikal über der Kühlereinrichtung 32 angeordnet und erstreckt sich in Fahrzeugquerrichtung von dem Seitenblech 22 aus über circa die Hälfte der Fläche der Kühlereinrichtung 32. Der Wärmetransport von dem warmen Bauteil, im dargestellten Ausführungsbeispiel von der Kühlereinrichtung 32, zu dem zweiten Aufbewahrungsfach 51 erfolgt bevorzugt über Strahlung des warmen Bauteils und/oder über Luftmassentransport von warmer Luft und/oder durch Wärmeleitung über die das warme Bauteil befestigende Trägerbauteile, die aus Metall oder Aluminium bestehen können.

Das erste Aufbewahrungsfach 50 ist - wie in der Figur 1 ersichtlich ist - mittels eines in einer Oberwand des haubenartigen Gehäuses 4 angeordneten Deckels 70 zugänglich.

Das zweite Aufbewahrungsfach 51 ist - wie in der Figur 1 ersichtlich ist - mittels eines in der Oberwand des haubenartigen Gehäuses 4 angeordneten Deckels 71 zugänglich.

Der Deckel 70 und der Deckel 71 sind hierbei in Fahrzeugquerrichtung seitlich neben dem Luftauslassgitter 35 angeordnet.

Das erste Aufbewahrungsfach 50 ist somit als ein von Wänden 22, 41, 55, 60, 61, 23 und dem Deckel 70 abgeschlossenes Aufbewahrungsfach ausgebildet.

Das zweite Aufbewahrungsfach 51 ist somit als ein von Wänden 22, 56, 61, 63 und dem Deckel 71 abgeschlossenes Aufbewahrungsfach ausgebildet.

## Patentansprüche

1. Mobile Arbeitsmaschine (1), insbesondere Forstmaschine, die ein Fahrwerk (2) und ein Antriebsaggregat (M), das einen Verbrennungsmotor (15) und mindestens eine von dem Verbrennungsmotor (15) angetriebene Hydraulikpumpe (16; 17), die eine Hydraulikanlage mit Druckmittel versorgt, aufweist, wobei der Verbrennungsmotor (15) mit der Hydraulikpumpe (16; 17) in einem innerhalb eines haubenartigen Gehäuses (4) ausgebildeten Motorraum (20) angeordnet ist, wobei die Arbeitsmaschine (1) keinen Fahrerarbeitsplatz für einen Bediener aufweist und als mittels einer Funkfernsteuerung ferngesteuerte Arbeitsmaschine (1) ausgebildet ist, **dadurch gekennzeichnet, dass** innerhalb des haubenartigen Gehäuses (4) mindestens ein von der Abwärme des Antriebsaggregats (M) erwärmbares Aufbewahrungsfach (50; 51) angeordnet ist, wobei innerhalb des haubenartigen Gehäuses (4) ein von der Abwärme mindestens eines heißen Bauteils des Antriebsaggregats (M) erwärmbares erstes Aufbewahrungsfach (50) angeordnet ist, wobei das heiße Bauteil des Antriebsaggregats (M) eine Auspuffanlage des Verbrennungsmotors (15) darstellt.

2. Mobile Arbeitsmaschine nach Anspruch 1, **dadurch gekennzeichnet, dass** innerhalb des haubenartigen Gehäuses (4) ein von der Abwärme mindestens eines warmen Bauteils des Antriebsaggregats (M) erwärmbares zweites Aufbewahrungsfach (51) angeordnet ist.

3. Mobile Arbeitsmaschine nach Anspruch 1 oder 2, **dadurch gekennzeichnet, dass** innerhalb des haubenartigen Gehäuses (4) die einen Endschalldämpfer (33) umfassende Auspuffanlage des Verbrennungsmotors (15) und eine Kühlereinrichtung (32) der Hydraulikanlage oder des Verbrennungsmotors (15) angeordnet sind, wobei innerhalb des haubenartigen Gehäuses (4) angrenzend an den Endschalldämpfer (33) das von der Abwärme der Auspuffanlage, insbesondere des Endschalldämpfers (33), erwärmbare erste Aufbewahrungsfach (50) und/oder innerhalb des haubenartigen Gehäuses (4) angrenzend an die Kühlereinrichtung (32) das von der Abwärme der Kühlereinrichtung (32) erwärmbare zweite Aufbewahrungsfach (51) angeordnet ist.

4. Mobile Arbeitsmaschine nach Anspruch 3, **dadurch gekennzeichnet, dass** der Endschalldämpfer (33) in einem innerhalb des haubenartigen Gehäuses (4) oberhalb des Motorraums (20) angeordneten Kühler- und Abgasraum (30) angeordnet ist, wobei das erste Aufbewahrungsfach (50) in dem Kühler- und Abgasraum (30) angrenzend an den Endschalldämpfer (33) angeordnet ist.

5. Mobile Arbeitsmaschine nach Anspruch 3 oder 4, **dadurch gekennzeichnet, dass** die Kühlereinrichtung (32) in dem innerhalb des haubenartigen Gehäuses (4) oberhalb des Motorraums (20) angeordneten Kühler- und Abgasraum (30) angeordnet ist, wobei das zweite Aufbewahrungsfach (51) in dem Kühler- und Abgasraum (20) angrenzend an die Kühlereinrichtung (32) angeordnet ist.

6. Mobile Arbeitsmaschine nach einem der Ansprüche 3 bis 5, **dadurch gekennzeichnet, dass** der Endschalldämpfer (33) in einem in dem Kühler- und Abgasraum (30) angeordneten Geräuschdämmkasten (40) angeordnet ist, wobei eine Seitenwand (41) des Geräuschdämmkastens (40) gleichzeitig eine Seitenwand des ersten Aufbewahrungsfachs (51) bildet.

7. Mobile Arbeitsmaschine nach einem der Ansprüche 3 bis 6, **dadurch gekennzeichnet, dass** das erste Aufbewahrungsfach (50) seitlich und vertikal über dem Endschalldämpfer (33) angeordnet ist.

8. Mobile Arbeitsmaschine nach einem der Ansprüche 3 bis 7, **dadurch gekennzeichnet, dass** das zweite Aufbewahrungsfach (51) eine im Abluftstrom der Kühlereinrichtung (32) liegende Seitenwand (56) aufweist.

9. Mobile Arbeitsmaschine nach einem der Ansprüche 3 bis 8, **dadurch gekennzeichnet, dass** die Kühlereinrichtung (32) liegend in dem Kühler- und Abgasraum (30) angeordnet ist mit einem Abluftstrom nach vertikal oben.

10. Mobile Arbeitsmaschine nach einem der Ansprüche 3 bis 9, **dadurch gekennzeichnet, dass** das zweite Aufbewahrungsfach (51) seitlich und vertikal über der Kühlereinrichtung (32) angeordnet ist.

11. Mobile Arbeitsmaschine nach einem der Ansprüche 1 bis 10 **dadurch gekennzeichnet, dass** das mindestens eine Aufbewahrungsfach (50; 51) mittels eines in einer Oberwand oder einer Seitenwand des haubenartigen Gehäuses (4) angeordneten Deckels (70; 71) zugänglich ist.

12. Mobile Arbeitsmaschine nach einem der Ansprüche 1 bis 11, **dadurch gekennzeichnet, dass** das mindestens eine Aufbewahrungsfach (50; 51) mit einer elektrischen Zusatzheizung versehen ist.

13. Mobile Arbeitsmaschine nach einem der Ansprüche 1 bis 12, **dadurch gekennzeichnet, dass** das mindestens eine Aufbewahrungsfach (50; 51) zur Temperatureinstellung mit jeweils einer Isolier-Klappeneinrichtung versehen ist.

## Claims

1. Mobile working machine (1), in particular a forestry machine, which has a chassis (2) and a drive unit (M) which has an internal combustion engine (15) and at least one hydraulic pump (16; 17) which is driven by the internal combustion engine (15) and supplies a hydraulic system with pressure medium, wherein the internal combustion engine (15) with the hydraulic pump (16; 17) is arranged in an engine compartment (20) formed within a hood-like housing (4), wherein the working machine (1) has no driver's workstation for an operator and is designed as a remote controlled working machine (1) controlled by means of a radio remote control, **characterized in that** at least one storage compartment (50; 51) which can be heated by the waste heat of the drive unit (M) is arranged within the hood-like housing (4), wherein a first storage compartment (50) which can be heated by the waste heat of at least one hot component of the drive unit (M) is arranged within the hood-like housing (4), wherein the hot component of the drive unit (M) is an exhaust system of the internal combustion engine (15).

2. Mobile working machine according to Claim 1, **characterized in that** a second storage compartment (51) which can be heated by the waste heat of at least one warm component of the drive unit (M) is arranged within the hood-like housing (4).

3. Mobile working machine according to Claim 1 or 2, **characterized in that** the exhaust system, comprising a rear silencer (33), of the internal combustion engine (15) and a radiator device (32) of the hydraulic system or of the internal combustion engine (15) are arranged within the hood-like housing (4), wherein the first storage compartment (50) which can be heated by the waste heat of the exhaust system, in particular of the rear silencer (33), is arranged within the hood-like housing (4) adjacently with respect to the rear silencer (33), and/or the second storage compartment (51) which can be heated by the waste heat of the radiator device (32) is arranged within the hood-like housing (4) adjacently with respect to the radiator device (32).

4. Mobile working machine according to Claim 3, **characterized in that** the rear silencer (33) is arranged in a radiator and exhaust compartment (30) arranged within the hood-like housing (4) above the engine compartment (20), wherein the first storage compartment (50) is arranged in the radiator and exhaust compartment (30) adjacently with respect to the rear silencer (33).

5. Mobile working machine according to Claim 3 or 4, **characterized in that** the radiator device (32) is arranged in the radiator and exhaust compartment (30) arranged within the hood-like housing (4) above the engine compartment (20), wherein the second storage compartment (51) is arranged in the radiator and exhaust compartment (20) adjacently with respect to the radiator device (32).

6. Mobile working machine according to one of Claims 3 to 5, **characterized in that** the rear silencer (33) is arranged in a sound insulation box (40) arranged in the radiator and exhaust compartment (30), wherein a side wall (41) of the sound insulation box (40) at the same time forms a side wall of the first storage compartment (51).

7. Mobile working machine according to one of Claims 3 to 6, **characterized in that** the first storage compartment (50) is arranged laterally and vertically above the rear silencer (33).

8. Mobile working machine according to one of Claims 3 to 7, **characterized in that** the second storage compartment (51) has a side wall (56) lying in the exhaust air flow of the radiator device (32).

9. Mobile working machine according to one of Claims 3 to 8, **characterized in that** the radiator device (32) is arranged lying in the radiator and exhaust compartment (30) with an exhaust air flow vertically upwards.

10. Mobile working machine according to one of Claims 3 to 9, **characterized in that** the second storage compartment (51) is arranged laterally and vertically above the radiator device (32).

11. Mobile working machine according to one of Claims 1 to 10, **characterized in that** the at least one storage compartment (50; 51) is accessible by means of a cover (70; 71) arranged in an upper wall or a side wall of the hood-like housing (4).

12. Mobile working machine according to one of Claims 1 to 11, **characterized in that** the at least one storage compartment (50; 51) is provided with an electric auxiliary heater.

13. Mobile working machine according to one of Claims 1 to 12, **characterized in that** the at least one storage compartment (50; 51) is provided with an insulating flap device in each case for temperature regulation.

## Revendications

1. Machine de travail (1) mobile, en particulier machine forestière, comprenant un châssis (2) et un système d'entraînement (M) qui comporte un moteur à combustion interne (15) et au moins une pompe hydraulique (16 ; 17) qui est entraînée par ce moteur à combustion interne (15) et alimente une installation hydraulique en fluide sous pression, le moteur à combustion interne (15) étant agencé avec la pompe hydraulique (16 ; 17) dans un compartiment moteur (20) formé à l'intérieur d'un logement (4) de type capot, la machine de travail (1) ne comportant pas de place de travail conducteur pour un utilisateur et étant réalisée sous la forme d'une machine de travail (1) commandée à distance au moyen d'une télécommande radio, **caractérisée en ce qu'**au moins un compartiment de stockage (50 ; 51) pouvant être chauffé par la chaleur dissipée par le système d'entraînement (M) est agencé à l'intérieur du logement (4) de type capot, un premier compartiment de stockage (50) pouvant être chauffé par la chaleur dissipée par au moins un composant chaud du système d'entraînement (M) étant agencé à l'intérieur du logement (4) de type capot, le composant chaud du système d'entraînement (M) représentant une installation d'échappement du moteur à combustion interne (15).

2. Machine de travail mobile selon la revendication 1, **caractérisée en ce qu'**un deuxième compartiment de stockage (51) pouvant être chauffé par la chaleur dissipée par au moins un composant chaud du système d'entraînement (M) est agencé à l'intérieur du logement (4) de type capot.

3. Machine de travail mobile selon la revendication 1 ou 2, **caractérisée en ce que** l'installation d'échappement du moteur à combustion interne (15) comprenant un silencieux arrière (33) et un dispositif de refroidissement (32) de l'installation hydraulique ou du moteur à combustion interne (15) sont agencés à l'intérieur du logement (4) de type capot, le premier compartiment de stockage (50) pouvant être chauffé par la chaleur dissipée par l'installation d'échappement, en particulier du silencieux arrière (33), étant agencé à l'intérieur du logement (4) de type capot, de manière adjacente au silencieux arrière (33), et/ou le deuxième compartiment de stockage (51) pouvant être chauffé par la chaleur dissipée par le dispositif de refroidissement (32) étant agencé à l'intérieur du logement (4) de type capot, de manière adjacente au dispositif de refroidissement (32).

4. Machine de travail mobile selon la revendication 3, **caractérisée en ce que** le silencieux arrière (33) est agencé dans un compartiment pour radiateur et gaz d'échappement (30) agencé à l'intérieur du logement (4) de type capot, au-dessus du compartiment moteur (20), le premier compartiment de stockage (50) étant agencé dans le compartiment pour radiateur et gaz d'échappement (30), de manière adjacente au silencieux arrière (33).

5. Machine de travail mobile selon la revendication 3 ou 4, **caractérisée en ce que** le dispositif de refroidissement (32) est agencé dans le compartiment pour radiateur et gaz d'échappement (30) agencé à l'intérieur du logement (4) de type capot, au-dessus du compartiment moteur (20), le deuxième compartiment de stockage (51) étant agencé dans le compartiment pour radiateur et gaz d'échappement (20), de manière adjacente au dispositif de refroidissement (32).

6. Machine de travail mobile selon l'une quelconque des revendications 3 à 5, **caractérisée en ce que** le silencieux arrière (33) est agencé dans un caisson d'isolation phonique (40) agencé dans le compartiment pour radiateur et gaz d'échappement (30), une paroi latérale (41) du caisson d'isolation phonique (40) formant simultanément une paroi latérale du premier compartiment de stockage (51).

7. Machine de travail mobile selon l'une quelconque des revendications 3 à 6, **caractérisée en ce que** le premier compartiment de stockage (50) est agencé latéralement et verticalement au-dessus du silencieux arrière (33).

8. Machine de travail mobile selon l'une quelconque des revendications 3 à 7, **caractérisée en ce que** le deuxième compartiment de stockage (51) présente une paroi latérale (56) située dans le flux d'air d'échappement du dispositif de refroidissement (32).

9. Machine de travail mobile selon l'une quelconque des revendications 3 à 8, **caractérisée en ce que** le dispositif de refroidissement (32) est agencé horizontalement dans le compartiment pour radiateur et gaz d'échappement (30) avec un flux d'air d'échappement orienté verticalement vers le haut.

10. Machine de travail mobile selon l'une quelconque des revendications 3 à 9, **caractérisée en ce que** le deuxième compartiment de stockage (51) est agencé latéralement et verticalement au-dessus du dispositif de refroidissement (32) .

11. Machine de travail mobile selon l'une quelconque des revendications 1 à 10, **caractérisée en ce que** l'au moins un compartiment de stockage (50 ; 51) est accessible au moyen d'un couvercle (70 ; 71) agencé dans une paroi supérieure ou une paroi latérale du logement (4) de type capot.

12. Machine de travail mobile selon l'une quelconque des revendications 1 à 11, **caractérisée en ce que** l'au moins un compartiment de stockage (50 ; 51) est pourvu d'un chauffage électrique d'appoint.

13. Machine de travail mobile selon l'une quelconque des revendications 1 à 12, **caractérisée en ce que** l'au moins un compartiment de stockage (50 ; 51) est pourvu d'un dispositif à clapet isolant pour le réglage de la température.
